# EUROPEAN PATENT SPECIFICATION

(11) **EP 4 174 343 B1**
(45) Date of publication and mention of the grant of the patent: **21.08.2024**
(21) Application number: 22203781.4
(22) Date of filing: 26.10.2022
(51) Int. Cl.: F16H 57/04

(54) **ELECTRIC DRIVE ASSEMBLY SYSTEM AND VEHICLE COMPRISING SAME**
ELEKTRISCHES ANTRIEBSANORDNUNGSSYSTEM UND FAHRZEUG DAMIT
SYSTÈME D'ENSEMBLE D'ENTRAÎNEMENT ÉLECTRIQUE ET VÉHICULE LE COMPRENANT

(30) Priority: 27.10.2021 CN 202111254159
(43) Date of publication of application: 03.05.2023
(73) Proprietor: Valeo eAutomotive Germany GmbH, 91056 Erlangen (DE)
(72) Inventor: Zhao, Zhenyu, 91056 Erlangen (DE); Liu, Tingting, 91056 Erlangen (DE); Zhu, Shiping, 91056 Erlangen (DE); Wang, Wenhui, 91056 Erlangen (DE); Chen, Rupeng, 91056 Erlangen (DE); Ma, Huilong, 91056 Erlangen (DE); Deng, Xiaoxue, 91056 Erlangen (DE); Hu, Haoqiang, 91056 Erlangen (DE)
(74) Representative: Valeo Powertrain Systems

(56) References cited:
- WO-A1-2014/155933
- CN-U- 209 856 357
- FR-A1- 2 740 853
- JP-A- 2007 315 456
- JP-A- H09 216 525
- US-A1- 2018 163 847
- US-A1- 2021 054 920

## Description

### TECHNICAL FIELD

The present disclosure relates to an electric drive assembly system, and in particular, to an electric drive assembly system installed in an electric vehicle. The present disclosure further relates to a vehicle comprising the electric drive assembly system.

### BACKGROUND

A gearbox is usually installed in a motor vehicle, and a series of transmission components are accommodated in a housing of the gearbox to transmit power from a power source to wheels, so as to drive the vehicle to travel. In an electric vehicle (such as a battery electric vehicle or a hybrid vehicle), an electric drive system of the vehicle generally includes an electric motor for providing power, an inverter for controlling the electric motor, and a gearbox. When the gearbox is installed in the vehicle in place, lubricating oil inside a box body of the gearbox that is used to lubricate each transmission component is deposited at the bottom of the box body, and the rotation of a gear in the gearbox stirs the lubricating oil at the bottom of the box body such that the lubricating oil splashes to nearby parts to lubricate the parts. However, the splashed lubricating oil often cannot reach some parts that also need lubrication, but are far away from an oil groove, and cannot be splashed with the lubricating oil. In this case, a solution is to put a large amount of lubricating oil in the gearbox housing, and cause, by accumulating the lubricating oil in the box body or causing the gear to stir up more lubricating oil, the lubricating oil to reach those parts that need lubrication but cannot be splashed. However, this solution requires a large amount of lubricating oil, which significantly increases costs, and also further affects the power transmission efficiency, such as reducing output power of the gearbox. This is because stirring up excessive lubricating oil will lead to energy loss (i.e., oil stirring loss), thereby reducing the transmission efficiency of the drive system, and reducing an endurance mileage of the vehicle when a battery assembly of the vehicle remains unchanged. In addition, the overall weight of the drive system is further increased. An electric drive assembly is known from FR2740853A1.

### SUMMARY

An objective of the present invention is to propose an electric drive assembly system to solve the foregoing problems, which can collect, through a simple arrangement, lubricating oil splashed when a gear rotates, guide the lubricating oil to parts that are difficult to be splashed, and lubricate the parts that are difficult to lubricate in the prior art without increasing a total amount of lubricating oil, thereby ensuring the power transmission efficiency.

An electric drive assembly system according to the present invention is recited in claim 1.

In the present invention,
the oil collecting and guiding component is arranged to form a lubricating arrangement with the rotating shaft, the first gear and the lubricating oil deposited in the housing, and the lubricating arrangement constructs a lubricating oil supply channel from a side close to the deposited lubricating oil to a side far away from the deposited lubricating oil, which can lubricate the parts which are difficult to lubricate at a distal end without increasing a usage amount of the lubricating oil, while ensuring the power transmission efficiency. In addition, the oil collecting and guiding component according to the present invention is small in size and easy to manufacture, and only a blank and very small area in an inner space of the housing of the electric drive assembly system is used, without interfering with the arrangement and operation of original parts of the electric drive assembly system and occupying the space of the original parts.

According to the invention, the electric drive assembly system further comprises a second gear, the second gear being fixed to the rotating shaft to rotate with the rotating shaft, and the second gear being axially closer to the second end of the rotating shaft than the first gear.

According to the invention, the oil collecting and guiding component further comprises a second inlet, and the second inlet is arranged near an outer edge of the second gear and is configured to receive the lubricating oil splashed when the second gear rotates. In the present disclosure, in the presence of the second gear, the lubricating oil splashed by the second gear can also be collected and guided, so that the oil collecting and guiding component implements "bidirectional" oil collection, that is, only one oil collecting and guiding component is used to collect the lubricating oil splashed when the two gears rotate, and more lubricating oil is collected and guided without increasing the size of the oil collecting and guiding component itself, thus improving the lubrication efficiency.

In an embodiment, the oil collecting and guiding component comprises a first baffle and a second baffle which define the guide portion, the first baffle and the second baffle are connected to each other at an angle, the first inlet is arranged at a free edge of the first baffle, and the second inlet is arranged at a free edge of the second baffle.

In an embodiment, the free edge of the first baffle is provided with a first flange on a part where no first inlet is provided.

In an embodiment, the free edge of the second baffle is provided with a second flange on a part where no second inlet is provided.

The free edges of the baffles are provided with the flanges, which can effectively prevent the collected lubricating oil from flowing out of the oil collecting and guiding component through a part other than the outlet, thus causing a waste and reducing the lubrication efficiency.

In an embodiment, the first baffle and the second baffle extend along an axis parallel to the central axis.

In an embodiment, the oil collecting and guiding component further comprises a third baffle, and the third baffle is transversely connected to the first baffle and the second baffle. The arrangement of the third baffle can prevent the collected lubricating oil from flowing out in a direction opposite to the outlet.

In an embodiment, the oil collecting and guiding component is fixed to the housing by means of the third baffle.

In an embodiment, the outlet is a tubular outlet.

In an embodiment, an oil guide channel is formed in the housing, and the oil guide channel communicates with the outlet of the oil collecting and guiding component and leads to the second bearing to convey the lubricating oil from the oil collecting and guiding component to the second bearing.

In an embodiment, the housing is provided with a plug, the oil guide channel has an opening on the housing, and the plug is inserted into the opening to seal the opening.

In an embodiment, the electric drive assembly system comprises a gearbox, and the gearbox comprises an input shaft and a differential, wherein the rotating shaft is an intermediate shaft between the input shaft and the differential, and the first gear is a gear fixedly arranged on a rotation shaft of the differential to rotate with the rotation shaft.

The present invention further relates to a vehicle comprising the foregoing electric drive assembly system.

### BRIEF DESCRIPTION OF THE DRAWINGS

In order to describe the technical solutions in the embodiments of the present invention more clearly, the accompanying drawings required for describing the embodiments are briefly described below. Obviously, the accompanying drawings in the following description show merely some embodiments of the present invention, and a person of ordinary skill in the art can further derive other accompanying drawings from these accompanying drawings without creative efforts. The following accompanying drawings are not intended to be drawn in equal scaling according to actual size.
FIG. 1 shows a schematic side view of an arrangement of some elements of an electric drive assembly system according to the present invention, viewed in a direction perpendicular to a central axis of a rotating shaft;
FIG. 2 shows a schematic perspective view of the arrangement of the elements shown in FIG. 1;
FIGS. 3 and 4 show a schematic front view and another schematic side view of the arrangement of the elements shown in FIG. 1;
FIG. 5 shows another schematic side view of the arrangement of the elements shown in FIG. 1, to more clearly show a relative position relationship between the elements;
FIGS. 6A to 6C are respectively a schematic perspective view, a front view from an outlet side, and a side view from a side of a first inlet of an oil collecting and guiding component according to the present invention; and
FIG. 7 is a schematic cross-sectional view of an electric drive assembly system according to the present invention, taken along a plane comprising a central axis of a rotating shaft.

### DETAILED DESCRIPTION

The technical solutions in the embodiments of the present invention will be clearly and completely described below with reference to the accompanying drawings. Obviously, the described embodiments are merely some rather than all of the embodiments of the present invention.

In the present invention, an axial direction refers to a direction of a central axis X of an input shaft of a gearbox, and a radial direction refers to a direction perpendicular to the central axis X.

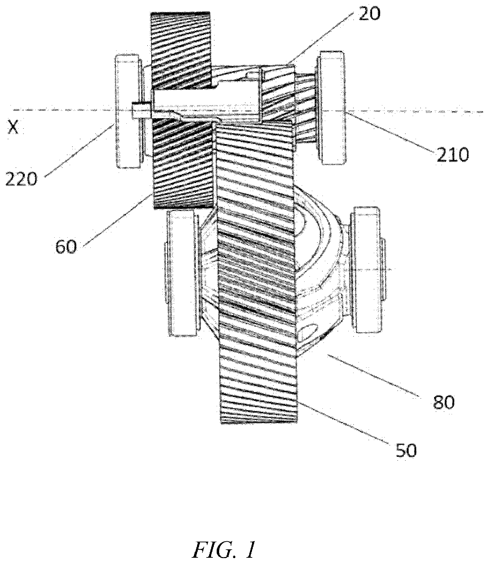

Referring to FIG. 1, FIG. 1 shows an arrangement of some elements of an electric drive assembly system according to the present invention in a schematic side view, viewed from a direction perpendicular to a central axis X of a rotating shaft of the electric drive assembly system.

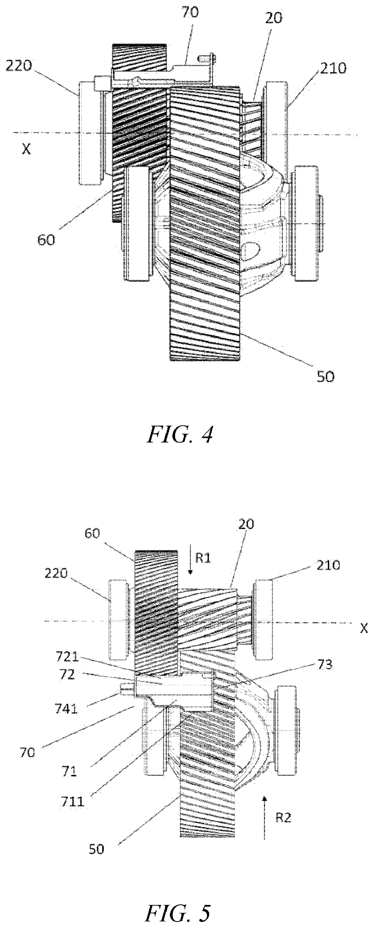

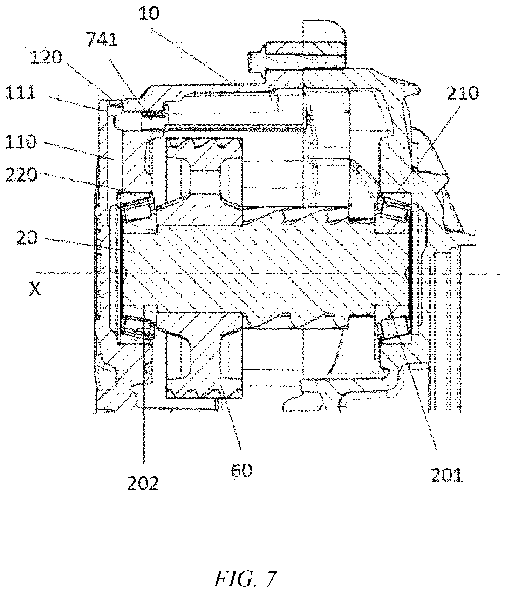

The electric drive assembly system according to the present invention comprises a housing 10 (FIG. 7). To more clearly describe the technical solution according to the present disclosure, the housing of the electric drive assembly system is not shown in FIGS. 1-5. When the electric drive assembly system is installed in place in a vehicle, a predetermined amount of lubricating oil is deposited at the bottom of the housing 10 to lubricate each transmission component in the housing.

As shown in FIGS. 1 to 5, the electric drive assembly system includes a rotating shaft 20, and the rotating shaft 20 extends along its central axis X and can rotate around the central axis X in a first rotation direction R1.

Referring to FIG. 7, the rotating shaft 20 includes a first end 201 and a second end 202 opposite to the first end 201 in a direction of the central axis X. The first end 201 is supported by a first bearing 210, and the second end 202 is supported by a second bearing 220. Therefore, the rotating shaft 20 is supported in the housing 10 by means of the first bearing 210 and the second bearing 220 in a manner of being rotatable in the first rotation direction R1.

In the present invention, the electric drive assembly system includes, for example, a gearbox, and the housing 10 is a housing of the gearbox. The gearbox includes an input shaft and a differential 80. In this case, the rotating shaft 20 may be, for example, an intermediate shaft between the input shaft and the differential of the gearbox. It should be understood that the lubricating arrangement according to the present invention can be applied to other applicable situations.

The electric drive assembly system includes a first gear 50, which may be, for example, a gear fixedly arranged on a rotation shaft of the differential 80 to rotate with the rotation shaft. As shown in the figure, the first gear 50 is arranged to mesh with the first end 201 of the rotating shaft 20, so as to rotate in a second rotation direction R2 opposite to the first rotation direction R1. The first gear 50 is, for example, a bevel gear, and a fitting bevel gear is provided at the first end 201 of the rotating shaft 20. The first end 201 of the rotating shaft 20 is positioned close to the lubricating oil deposited in the housing 10. Illustratively, a part of the bottom of the housing 10 where the lubricating oil is deposited is located below the first gear 50, and an oil level of the lubricating oil submerges a part of the lower half of the first gear 50. Therefore, in an operation state, the first gear 50 can splash the deposited lubricating oil when rotating, and the splashed lubricating oil can fly out tangentially to a rotation direction of the gear and reach the first bearing 210 supporting the first end 201 of the rotating shaft 20, so as to lubricate the first bearing 210.

However, the second bearing 220 at the second end 202 of the rotating shaft 20 is far away from the lubricating oil deposited in the housing 20, and it is difficult for the lubricating oil splashed when the first gear 50 rotates to reach the second bearing 220 so as to lubricate the second bearing.

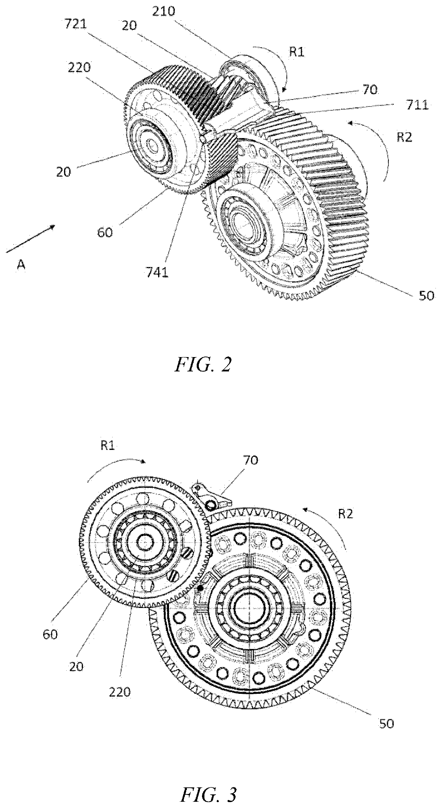

Further, the electric drive assembly system further includes a second gear 60, and the second gear 60 is fixed to the rotating shaft 20 to rotate with the rotating shaft. Specifically, referring to FIGS. 2 and 3, FIG. 2 shows a schematic perspective view of an arrangement of elements, and FIG. 3 is a schematic front view of the arrangement of the elements viewed from a direction indicated by an arrow A in FIG. 2. In the views of FIGS. 2 and 3, the second gear 60 rotates in the first rotation direction R1 (clockwise direction shown in the figure) with the rotating shaft 20, and the first gear 50 rotates in the second rotation direction R2 (anticlockwise direction shown in the figure) opposite to the first rotation direction R1. In an upper junction area of the first gear 50 and the second gear 60 in a radial plane, the first gear 50 and the second gear 60 rotate opposite to each other.

As shown in FIGS. 1 to 5, the second gear 60 is closer to the second end 202 of the rotating shaft 20 than the first gear 50 in the direction of the central axis X, that is, the second gear 60 is positioned away from the first end 201 of the rotating shaft 20, and thus is positioned away from the lubricating oil deposited in the housing 10.

As the second gear 60 is located between the first gear 50 and the second bearing 220 in the direction of the central axis X, the lubricating oil splashed when the first gear 50 rotates is also blocked by the second gear 60, which further increases the difficulty of lubricating the second bearing.

Therefore, the electric drive assembly system according to the present invention further includes an oil collecting and guiding component 70 configured to collect lubricating oil splashed when the first gear 50 and the second gear 60 rotate, and guide the collected lubricating oil to the second bearing 220 of the rotating shaft 20.

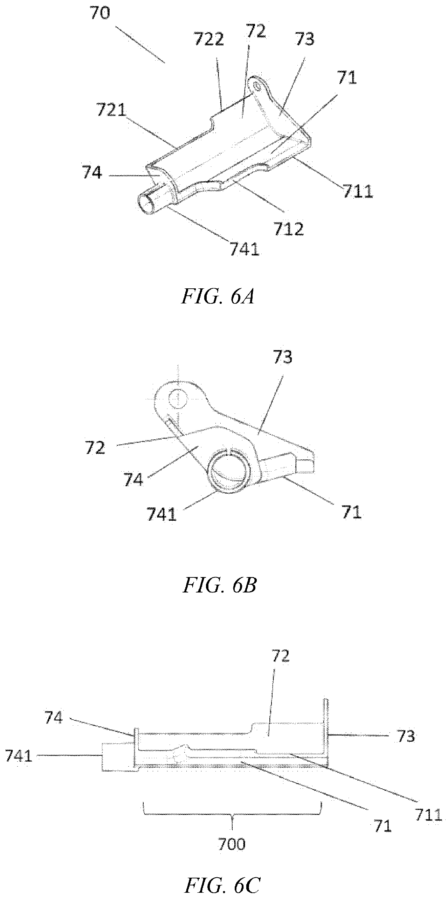

As shown in the figures, in particular, as shown in FIGS. 2 and 6A-6C, the oil collecting and guiding component 70 includes a first baffle 71 and a second baffle 72, which are connected to each other at an angle. The first baffle 71 and the second baffle 72 may have an overall shape of approximately a plane, and the included angle between the first baffle and the second baffle is set according to the angular arrangement of the first gear 50 and the second gear 60 in the junction area. The first baffle 71 and the second baffle 72 can extend in an axis parallel to the central axis X, and a connecting area between the first baffle and the second baffle can also extend in the direction parallel to the central axis X. The first baffle 71 and the second baffle 72 define a V-shaped groove structure, and the bottom of the V-shaped groove is a connecting part of the first baffle 71 and the second baffle 72.

The oil collecting and guiding component 70 further includes a third baffle 73. As shown in FIGS. 6A-6C, the third baffle 73 is transversely connected to the first baffle 71 and the second baffle 72. For example, the third baffle 73 is perpendicularly connected to the first baffle 71 and the second baffle 72 at their edges close to the first bearing 210 with respect to the first baffle 71 and the second baffle 72, thus preventing the oil collected by the oil collecting and guiding component 70 from flowing out toward the first bearing 210.

In addition, the oil collecting and guiding component 70 can also be fixed to the housing 10 by means of the third baffle 73. For example, the third baffle 73 is provided with a mounting through hole, and the oil collecting and guiding component 70 can be fixed to an inner wall of the housing 10 by means of a screw running through the mounting through hole.

The oil collecting and guiding component 70 may include a first inlet 711 arranged at a free edge of the first baffle 71, and the first inlet 711 is arranged near an outer edge of the first gear 50 and is configured to receive the lubricating oil splashed when the first gear 50 rotates. Preferably, as shown in FIG. 2, the first inlet 711 may be arranged to face the second rotation direction R2 along which the first gear 50 rotates. For example, an extension direction of the first inlet 711 is parallel to a tangent direction of a periphery of the first gear 50. Therefore, the lubricating oil splashed when the first gear 50 rotates enters the oil collecting and guiding component 70 through the first inlet 711, and is collected into a guide portion 700 defined by the first baffle 71 and the second baffle 72.

To guide the lubricating oil collected by the oil collecting and guiding component 70 toward the second bearing 220, the oil collecting and guiding component 70 may include an outlet 741, the outlet 741 is arranged close to the second end 202 of the rotating shaft 20, and the lubricating oil received through the first inlet 711 leaves the oil collecting and guiding component 70 through the outlet 741. As shown in FIGS. 6A-6C, the oil collecting and guiding component 70 may include, for example, a fourth baffle 74, and the fourth baffle 74 is transversely connected to the first baffle 71 and the second baffle 72 at their edges opposite to the third baffle 73. The outlet 741 may extend outward from the fourth baffle. Preferably, the outlet 741 is a tubular outlet.

The foregoing guide portion 700 connects the first inlet 711 and the outlet 741 to guide the lubricating oil from the first inlet 711 to the outlet 741, so as to lubricate the second bearing 220.

Further, to guide the lubricating oil collected by the oil collecting and guiding component 70 to the second bearing 220 to lubricate the second bearing, an oil guide channel 110 (FIG. 7) may be formed in the housing 10. The oil guide channel may be formed, for example, in a wall of the housing 10, is in fluid communication with the outlet 741 of the oil collecting and guiding component 70, and leads to the second bearing 220, so as to convey the lubricating oil from the oil collecting and guiding component 70 to the second bearing 220 in a preset direction.

The oil guide channel 110 may be, for example, a drilled hole formed in the wall of the housing 10, and has an opening 111 (an opening of the drilled hole) located in the housing 10. In order to cause the lubricating oil flowing out of the outlet 741 of the oil collecting and guiding component 70 to flow in the preset direction, the housing 10 may be provided with a plug 120 to seal the opening 111 of the oil guide channel 110 in the housing 10, so that the lubricating oil from the outlet 741 is deflected, and thus reaches the second bearing 220 along the oil guide channel 110 to lubricate the second bearing.

The second gear 60 can splash, when rotating, the lubricating oil splashed when the first gear 50 rotates, but the lubricating oil splashed by the second gear 60 for the second time is not enough to lubricate the second bearing 220. In order to collect the lubricating oil splashed by the second gear 60, the oil collecting and guiding component 70 further includes a second inlet 721, and the second inlet 721 may be arranged, for example, on a free edge of the second baffle 72. As shown in the figure, the second inlet 721 is arranged near an outer edge of the second gear 60, and is configured to receive the lubricating oil splashed when the second gear 60 rotates. For example, the second inlet 721 may be arranged to face the first rotation direction R1 along which the second gear 60 rotates. For example, an extension direction of the second inlet 721 is parallel to a tangent direction of a periphery of the second gear 60. Therefore, the lubricating oil splashed when the second gear 60 rotates enters the oil collecting and guiding component 70 through the second inlet 721, and is collected into the guide portion 700 defined by the first baffle 71 and the second baffle 72.

Therefore, the lubricating oil splashed by the second gear 60 can also be collected and guided, so that the oil collecting and guiding component 70 implements "bidirectional" oil collection, that is, only one oil collecting and guiding component is used to collect the lubricating oil splashed when the two gears 60 and 70 rotate, and more lubricating oil is collected and guided without increasing the size of the oil collecting and guiding component itself, thus improving the lubrication efficiency.

As shown in FIGS. 6A-6C, in order to prevent the collected lubricating oil from flowing out of the oil collecting and guiding component 70 through a part other than the outlet 741, the free edge of the first baffle 71 is provided with a first flange 712 on a part where no first inlet 711 is provided. The free edge of the second baffle 72 is provided with a second flange 722 on a part where no second inlet 721 is provided. The first flange 712 and the second flange 722 extend from the free edges where they are located toward the interior of a space defined by the first baffle 71 and the second baffle 72, so as to prevent the lubricating oil from accidentally leaking during guiding, resulting in a waste and then reducing the lubrication efficiency.

In the present invention, the oil collecting and guiding component 70 is arranged to form a lubricating arrangement with the oil collecting and guiding component, the rotating shaft, the first gear and the lubricating oil deposited in the housing, and the lubricating arrangement constructs a lubricating oil supply channel from a side close to the deposited lubricating oil to a side far away from the deposited lubricating oil, which can lubricate the parts which are difficult to lubricate at a distal end without increasing a usage amount of the lubricating oil. In addition, the oil collecting and guiding component 70 according to the present invention is small in size and easy to manufacture, and only a blank and very small area in an inner space of the housing of the electric drive assembly system is used, without interfering with the arrangement and operation of original parts of the electric drive assembly system and occupying the space of the original parts.

According to another aspect of the present invention a motor vehicle is provided, and includes the foregoing electric drive assembly system.

The motor vehicle may be a plug-in hybrid electric vehicle, or may be a battery electric vehicle or another type of motor vehicle. Based on the above, the motor vehicle can implement the functions of electric motor parts and an electric motor as described above, and has the advantages as described above.

Some features, structures, or characteristics in one or more embodiments of the present application may be combined appropriately.

Unless otherwise defined, all terms (including technical and scientific terms) used herein have the same meanings as those commonly understood by a person of ordinary skill in the art to which the present description pertains. It should also be understood that terms such as those defined in common dictionaries should be interpreted as having meanings consistent with their meanings in the context of related technologies, and should not be interpreted in idealized or extremely formal meanings, unless explicitly defined as such herein.

The above is an explanation of the present invention, and should not be considered as a limitation to the present invention. Although several exemplary embodiments of the present disclosure have been described, a person skilled in the art shall easily understand that many modifications can be made to the exemplary embodiments without departing from the novel teaching and advantages of the present invention. Therefore, all these modifications are intended to be included in the scope of the present invention as defined in the claims. It should be understood that the above is an explanation of the present invention, and the present invention should not be regarded as being limited to the specific embodiments disclosed, and modifications to the disclosed embodiments and other embodiments are intended to be included in the scope of the present invention.

## Claims

1. Electric drive assembly system comprising:
a housing (10), lubricating oil being deposited at the bottom of the housing;
a rotating shaft (20) extending along a central axis (X) and supported in the housing (10) by means of a first bearing (210) and a second bearing (220) in a manner of being rotatable in a first rotation direction (R1), the rotating shaft (20) comprising a first end (201) close to the deposited lubricating oil and supported by the first bearing (210) and a second end (202) opposite to the first end and supported by the second bearing (220); and
a first gear (50) arranged to mesh with the first end (201) of the rotating shaft (20) to rotate in a second rotation direction (R2) opposite to the first rotation direction (R1),
wherein the electric drive assembly system further comprises an oil collecting and guiding component (70), the oil collecting and guiding component (70) comprising:
a first inlet (711) arranged near an outer edge of the first gear (50) and configured to receive the deposited lubricating oil splashed when the first gear (50) rotates,
an outlet (741) arranged close to the second end of the rotating shaft (20), the received lubricating oil leaving the oil collecting and guiding component (70) through the outlet (741), and
a guide portion (700) which connects the first inlet (711) and the outlet (741) to guide the lubricating oil from the first inlet (711) to the outlet (741), so as to lubricate the second bearing (220),
comprising a second gear (60), the second gear (60) being fixed to the rotating shaft (20) to rotate with the rotating shaft, and the second gear (60) being axially closer to the second end (202) of the rotating shaft (20) than the first gear (50), **characterized in that** the oil collecting and guiding component (70) further comprises a second inlet (721), and the second inlet (721) is arranged near an outer edge of the second gear (60) and is configured to receive the lubricating oil splashed when the second gear (60) rotates.

2. Electric drive assembly system according to Claim 1, **characterized in that** the oil collecting and guiding component (70) comprises a first baffle (71) and a second baffle (72) which define the guide portion (700), the first baffle (71) and the second baffle (72) are connected to each other at an angle, the first inlet (711) is arranged at a free edge of the first baffle (71), and the second inlet (721) is arranged at a free edge of the second baffle (72).

3. Electric drive assembly system according to Claim 2, **characterized in that** the free edge of the first baffle (71) is provided with a first flange (712) on a part where no first inlet (711) is provided.

4. Electric drive assembly system according to Claim 3, **characterized in that** the free edge of the second baffle (72) is provided with a second flange (722) on a part where no second inlet (721) is provided.

5. Electric drive assembly system according to Claim 2, **characterized in that** the first baffle (71) and the second baffle (72) extend along an axis parallel to the central axis (X) .

6. Electric drive assembly system according to Claim 2, **characterized in that** the oil collecting and guiding component (70) further comprises a third baffle (73), and the third baffle (73) is transversely connected to the first baffle (71) and the second baffle (72).

7. Electric drive assembly system according to Claim 6, **characterized in that** the oil collecting and guiding component (70) is fixed to the housing (10) by means of the third baffle (73) .

8. Electric drive assembly system according to Claim 1, **characterized in that** the outlet (741) is a tubular outlet.

9. Electric drive assembly system according to claim 1, **characterized in that** an oil guide channel (110) is formed in the housing, and the oil guide channel communicates with the outlet (741) of the oil collecting and guiding component (70) and leads to the second bearing (220) to convey the lubricating oil from the oil collecting and guiding component to the second bearing.

10. Electric drive assembly system according to Claim 9, **characterized in that** the housing is provided with a plug (120), the oil guide channel (110) has an opening on the housing (10), and the plug (120) is inserted into the opening to seal the opening.

11. Electric drive assembly system according to Claim 1, **characterized in that** the electric drive assembly system comprises a gearbox, and the gearbox comprises an input shaft and a differential, wherein the rotating shaft (20) is an intermediate shaft between the input shaft and the differential, and the first gear (50) is a gear fixedly arranged on a rotation shaft of the differential to rotate with the rotation shaft.

12. Vehicle comprising the electric drive assembly system according to any one of Claims 1 to 11.

## Patentansprüche

1. Elektrisches Antriebsanordnungssystem, Folgendes umfassend:
ein Gehäuse (10), wobei Schmieröl am Boden des Gehäuses angeordnet ist;
eine drehende Welle (20), die sich entlang einer Mittelachse (X) erstreckt und mittels eines ersten Lagers (210) und eines zweiten Lagers (220) im Gehäuse (10) derart gelagert ist, dass sie in eine erste Drehrichtung (R1) drehbar ist, wobei die drehende Welle (20) ein erstes Ende (201) in der Nähe des abgelagerten Schmieröls und vom ersten Lager (210) gelagert und ein zweites Ende (202), das dem ersten Ende entgegengesetzt ist und vom zweiten Lager (220) gelagert wird, umfasst; und
ein erstes Zahnrad (50), das dazu angeordnet ist, in das erste Ende (201) der drehenden Welle (20) einzugreifen und sich in eine der ersten Drehrichtung (R1) entgegengesetzte zweite Drehrichtung (R2) zu drehen,
wobei das elektrische Antriebsanordnungssystem ferner eine Ölauffang- und Führungskomponente (70) umfasst,
wobei die Ölauffang- und Führungskomponente (70) Folgendes umfasst:
einen ersten Einlass (711), der in der Nähe einer Außenkante des ersten Zahnrads (50) angeordnet und dazu ausgelegt ist, das bei der Drehung des ersten Zahnrads (50) verspritzte abgelagerte Schmieröl aufzunehmen, einen Auslass (741), der in der Nähe des zweiten Endes der drehenden Welle (20) angeordnet ist, wobei das aufgenommene Schmieröl die Ölauffang- und Führungskomponente (70) durch den Auslass (741) verlässt, und
einen Führungsabschnitt (700), der den ersten Einlass (711) und den Auslass (741) miteinander verbindet, um das Schmieröl vom ersten Einlass (711) zum Auslass (741) zu führen, um das zweite Lager (220) zu schmieren,
umfassend ein zweites Zahnrad (60), wobei das zweite Zahnrad (60) an der drehenden Welle (20) fixiert ist, um sich mit der drehenden Welle zu drehen, und wobei das zweite Zahnrad (60) axial näher am zweiten Ende (202) der drehenden Welle (20) liegt als das erste Zahnrad (50), **dadurch gekennzeichnet, dass** die Ölauffang- und Führungskomponente (70) ferner einen zweiten Einlass (721) umfasst und der zweite Einlass (721) in der Nähe einer Außenkante des zweiten Zahnrads (60) angeordnet und dazu ausgelegt ist, das bei der Drehung des zweiten Zahnrads (60) verspritzte Schmieröl aufzunehmen.

2. Elektronisches Antriebsanordnungssystem nach Anspruch 1, **dadurch gekennzeichnet, dass** die Ölauffang- und Führungskomponente (70) ein erstes Ablenkblech (71) und ein zweites Ablenkblech (72) umfasst, die den Führungsabschnitt (700) definieren, wobei das erste Ablenkblech (71) und das zweite Ablenkblech (72) angewinkelt miteinander verbunden sind, wobei der erste Einlass (711) an einer freien Kante des ersten Ablenkblechs (71) angeordnet ist und der zweite Einlass (721) an einer freien Kante des zweiten Ablenkblechs (72) angeordnet ist.

3. Elektrisches Antriebsanordnungssystem nach Anspruch 2, **dadurch gekennzeichnet, dass** die freie Kante des ersten Ablenkblechs (71) an einem Teil, an dem kein erster Einlass (711) vorgesehen ist, mit einem ersten Flansch (712) versehen ist.

4. Elektrisches Antriebsanordnungssystem nach Anspruch 3, **dadurch gekennzeichnet, dass** die freie Kante des zweiten Ablenkblechs (72) an einem Teil, an dem kein zweiter Einlass (721) vorgesehen ist, mit einem zweiten Flansch (722) versehen ist.

5. Elektrisches Antriebsanordnungssystem nach Anspruch 2, **dadurch gekennzeichnet, dass** sich das erste Ablenkblech (71) und das zweite Ablenkblech (72) entlang einer Achse parallel zur Mittelachse (X) erstrecken.

6. Elektrisches Antriebsanordnungssystem nach Anspruch 2, **dadurch gekennzeichnet, dass** die Ölauffang- und Führungskomponente (70) ferner ein drittes Ablenkblech (73) umfasst und das dritte Ablenkblech (73) mit dem ersten Ablenkblech (71) und dem zweiten Ablenkblech (72) quer verbunden ist.

7. Elektrisches Antriebsanordnungssystem nach Anspruch 6, **dadurch gekennzeichnet, dass** die Ölauffang- und Führungskomponente (70) mittels des dritten Ablenkblechs (73) am Gehäuse (10) fixiert ist.

8. Elektrisches Antriebsanordnungssystem nach Anspruch 1, **dadurch gekennzeichnet, dass** der Auslass (741) ein rohrförmiger Auslass ist.

9. Elektrisches Antriebsanordnungssystem nach Anspruch 1, **dadurch gekennzeichnet, dass** im Gehäuse ein Ölführungskanal (110) ausgebildet ist und der Ölführungskanal mit dem Auslass (741) der Ölauffang- und Führungskomponente (70) kommuniziert und zum zweiten Lager (220) führt, um das Schmieröl von der Ölauffang- und Führungskomponente zum zweiten Lager zu befördern.

10. Elektrisches Antriebsanordnungssystem nach Anspruch 9, **dadurch gekennzeichnet, dass** das Gehäuse mit einem Stopfen (120) versehen ist, wobei der Ölführungskanal (110) eine Öffnung am Gehäuse (10) aufweist und der Stopfen (120) in die Öffnung eingesetzt wird, um die Öffnung zu verschließen.

11. Elektrisches Antriebsanordnungssystem nach Anspruch 1, **dadurch gekennzeichnet, dass** das elektrische Antriebsanordnungssystem ein Getriebe umfasst und das Getriebe eine Eingangswelle und ein Differential umfasst, wobei die drehende Welle (20) eine Zwischenwelle zwischen der Eingangswelle und dem Differential ist und das erste Zahnrad (50) ein Zahnrad ist, das fest an einer Drehwelle des Differentials angeordnet ist, um sich mit der Drehwelle zu drehen.

12. Fahrzeug, umfassend das elektrische Antriebsanordnungssystem nach einem der Ansprüche 1 bis 11.

## Revendications

1. Système formant ensemble d'entraînement électrique comprenant :
un carter (10), une huile lubrifiante étant déposée au fond du carter ;
un arbre rotatif (20) s'étendant le long d'un axe central (X) et supporté dans le carter (10) au moyen d'un premier palier (210) et d'un deuxième palier (220) de manière à pouvoir tourner dans une première direction de rotation (R1), l'arbre rotatif (20) comprenant une première extrémité (201) près de l'huile lubrifiante déposée et supportée par le premier palier (210) et une deuxième extrémité (202) opposée à la première extrémité et supportée par le deuxième palier (220) ; et
un premier organe d'engrenage (50) prévu pour s'engrener avec la première extrémité (201) de l'arbre rotatif (20) afin de tourner dans une deuxième direction de rotation (R2) opposée à la première direction de rotation (R1),
le système formant ensemble d'entraînement électrique comprenant en outre un composant de collecte et de guidage d'huile (70), le composant de collecte et de guidage d'huile (70) comprenant :
une première entrée (711) disposée à proximité d'un bord externe du premier organe d'engrenage (50) et conçue pour recevoir l'huile lubrifiante déposée projetée lorsque le premier organe d'engrenage (50) tourne,
une sortie (741) disposée à proximité de la deuxième extrémité de l'arbre rotatif (20), l'huile lubrifiante reçue sortant du composant de collecte et de guidage d'huile (70) par la sortie (741), et
une partie de guidage (700) qui raccorde la première entrée (711) et la sortie (741) pour guider l'huile lubrifiante de la première entrée (711) vers la sortie (741), de sorte à lubrifier le deuxième palier (220), comprenant un deuxième organe d'engrenage (60), le deuxième organe d'engrenage (60) étant fixé à l'arbre rotatif (20) afin de tourner avec l'arbre rotatif, et le deuxième organe d'engrenage (60) étant axialement plus proche de la deuxième extrémité (202) de l'arbre rotatif (20) que le premier organe d'engrenage (50), **caractérisé en ce que** le composant de collecte et de guidage d'huile (70) comprend en outre une deuxième entrée (721), et la deuxième entrée (721) est disposée près d'un bord externe du deuxième organe d'engrenage (60) et est conçue pour recevoir l'huile lubrifiante projetée lorsque le deuxième organe d'engrenage (60) tourne.

2. Système formant ensemble d'entraînement électrique selon la revendication 1, **caractérisé en ce que** le composant de collecte et de guidage d'huile (70) comprend un premier déflecteur (71) et un deuxième déflecteur (72) qui définissent la partie de guidage (700), le premier déflecteur (71) et le deuxième déflecteur (72) étant raccordés l'un à l'autre selon un certain angle, la première entrée (711) étant disposée au niveau d'un bord libre du premier déflecteur (71), et la deuxième entrée (721) étant disposée au niveau d'un bord libre du deuxième déflecteur (72).

3. Système formant ensemble d'entraînement électrique selon la revendication 2, **caractérisé en ce que** le bord libre du premier déflecteur (71) est pourvu d'un premier rebord (712) sur une partie ne comportant pas la première entrée (711).

4. Système formant ensemble d'entraînement électrique selon la revendication 3, **caractérisé en ce que** le bord libre du deuxième déflecteur (72) est pourvu d'un deuxième rebord (722) sur une partie ne comportant pas la deuxième entrée (721).

5. Système formant ensemble d'entraînement électrique selon la revendication 2, **caractérisé en ce que** le premier déflecteur (71) et le deuxième déflecteur (72) s'étendent le long d'un axe parallèle à l'axe central (X) .

6. Système formant ensemble d'entraînement électrique selon la revendication 2, **caractérisé en ce que** le composant de collecte et de guidage d'huile (70) comprend en outre un troisième déflecteur (73), et le troisième déflecteur (73) est raccordé transversalement au premier déflecteur (71) et au deuxième déflecteur (72).

7. Système formant ensemble d'entraînement électrique selon la revendication 6, **caractérisé en ce que** le composant de collecte et de guidage d'huile (70) est fixé au carter (10) au moyen du troisième déflecteur (73).

8. Système formant ensemble d'entraînement électrique selon la revendication 1, **caractérisé en ce que** la sortie (741) est une sortie tubulaire.

9. Système formant ensemble d'entraînement électrique selon la revendication 1, **caractérisé en ce qu'**un canal guide d'huile (110) est formé dans le carter, et le canal guide d'huile communique avec la sortie (741) du composant de collecte et de guidage d'huile (70) et mène au deuxième palier (220) pour acheminer l'huile lubrifiante du composant de collecte et de guidage d'huile au deuxième palier.

10. Système formant ensemble d'entraînement électrique selon la revendication 9, **caractérisé en ce que** le carter est pourvu d'un bouchon (120), le canal guide d'huile (110) a une ouverture sur le carter (10), et le bouchon (120) est inséré dans l'ouverture pour sceller l'ouverture.

11. Système formant ensemble d'entraînement électrique selon la revendication 1, **caractérisé en ce que** le système formant ensemble d'entraînement électrique comprend une boîte de vitesses, et la boîte de vitesses comprend un arbre d'entrée et un différentiel, l'arbre rotatif (20) étant un arbre intermédiaire entre l'arbre d'entrée et le différentiel, et le premier organe d'engrenage (50) étant un organe d'engrenage disposé fixement sur un arbre de rotation du différentiel afin de tourner avec l'arbre de rotation.

12. Véhicule comprenant le système formant ensemble d'entraînement électrique selon l'une quelconque des revendications 1 à 11.
